# EUROPEAN PATENT APPLICATION

(11) **EP 4 191 774 A1**
(43) Date of publication of application: **07.06.2023**
(21) Application number: 21849946.5
(22) Date of filing: 21.07.2021
(51) Int. Cl.: H01M 50/367, H01M 50/213, H01M 50/35

(54) **BATTERY PACK AND BATTERY CASE**

(30) Priority: 31.07.2020 JP 2020130469
(71) Applicant: Panasonic Intellectual Property Management Co., Ltd., Osaka-shi, Osaka 540-6207 (JP)
(72) Inventor: ISHIZAKA, Katsushi, Chuo-ku, Osaka-shi, Osaka 540-6207 (JP); SHIMIZU, Keisuke, Chuo-ku, Osaka-shi, Osaka 540-6207 (JP)
(74) Representative: Novagraaf International SA
(86) International application number: PCT/JP2021/027248
(87) International publication number: WO 2022/024894

(57) **Abstract**

A battery case includes: a battery container including a battery containing chamber containing a plurality of batteries, and an inner gas discharge hole for discharging a gas generated in the batteries on at least one side in a height direction of the batteries fixed to the battery containing chamber; and one or more gas exhaust passages including first and second corner passage parts that are located inside an outer wall part including an outer surface in contact with an outer region and outside the battery container and extend along the height direction, and an outer gas discharge hole for discharging the gas to the outside, the one or more gas exhaust passages guiding the gas from the inner gas discharge hole to the outer gas discharge hole.

## Description

### TECHNICAL FIELD

The present disclosure relates to a battery case and a battery pack.

### BACKGROUND ART

Conventionally, there is a battery pack described in PTL 1. This battery pack has a duct for flowing a gas released from a battery when the battery abnormally generates heat. In this battery pack, the temperature of the gas is lowered in the duct, and the low-temperature gas is discharged to the outside, thereby making it perfect the safety of the battery at the time of abnormal heat generation.

### Citation List

### Patent Literature

PTL 1: Japanese Patent No. 5378670

### SUMMARY OF THE INVENTION

### Technical problem

Since the battery pack is required to lay the duct, the structure tends to be complicated and the manufacturing cost tends to be high.

Therefore, an object of the present disclosure is to provide a battery case and a battery pack that can, with a simple structure at low cost, efficiently cool a gas released from a battery when the battery abnormally generates heat. Solution to problem

In order to solve the above problem, a battery case according to the present disclosure includes: a battery container including a battery containing chamber containing a plurality of cylindrical batteries, and an inner gas discharger for discharging a gas generated in the cylindrical batteries on at least one side in a height direction of the cylindrical batteries fixed to the battery containing chamber; and one or more gas exhaust passages including a height-direction passage part that is located inside an outer wall part having an outer surface in contact with an outer region and outside the battery container and is elongated along the height direction, and an outer gas discharger for discharging the gas to an outside, the one or more gas exhaust passages guiding a gas from an inner gas discharger to an outer gas discharger.

The inner gas discharger may include at least one of one or more inner holes and one or more inner relief parts that are broken when the internal pressure of the battery containing chamber becomes equal to or higher than first predetermined pressure. The outer gas discharger may include at least one of one or more outer holes and one or more outer relief parts that are broken when the internal pressure of a case containing chamber becomes equal to or higher than second predetermined pressure. When configured in such manner, the first predetermined pressure may be the same as the second predetermined pressure, or may be a pressure different from the second predetermined pressure.

The battery pack according to the present disclosure includes the battery case according to the present disclosure and the plurality of batteries arranged in the battery containing chamber of the battery case.

### Advantageous effect of invention

According to the present disclosure, it is possible to achieve a battery case and a battery pack that can efficiently cool, at low cost with a simple structure, a gas released from a battery when the battery abnormally generates heat.

### BRIEF DESCRIPTION OF THE DRAWINGS

Fig. 1 is a perspective view of a battery pack according to a first exemplary embodiment of the present disclosure.
Fig. 2 is a cross-sectional view taken along line A-A of Fig. 1.
Fig. 3 is a transparent perspective view illustrating an internal structure of the battery pack.
Fig. 4 is an enlarged transparent perspective view illustrating an internal structure of one side end in a height direction of a battery in the battery pack.
Fig. 5 is a perspective view of a battery pack according to a second exemplary embodiment of the present disclosure.
Fig. 6 is a schematic cross-sectional view corresponding to a schematic cross-sectional view taken along line E-E of Fig. 1 in a battery pack according to a third exemplary embodiment of the present disclosure.
Fig. 7 is a schematic cross-sectional view corresponding to Fig. 6 in a battery pack according to a fourth exemplary embodiment of the present disclosure.
Fig. 8 is a schematic cross-sectional view corresponding to Fig. 6 in a battery pack according to a fifth exemplary embodiment of the present disclosure.

### DESCRIPTION OF EMBODIMENT

Exemplary embodiments according to the present disclosure will be described below in detail with reference to the accompanying drawings. Note that in a case where a plurality of exemplary embodiments and modified examples are included in the following, it is assumed from the beginning to construct a new exemplary embodiment by appropriately combining feature parts of them. In the following example, the same configurations are given the same reference marks in the drawings, and redundant descriptions are omitted. A plurality of drawings include schematic views, and dimensional ratios such as a length, a width, and a height of each member do not necessarily coincide among different drawings. Those configuration elements described in the following that are not recited in independent claims representing the highest concept are illustrated herein as optional configuration elements and are not essential. In the present description, the term "substantial/substantially" is used in the same meaning as the term "approximate/approximately", and the requirement "substantially..." is satisfied if being substantially the same. In the drawings and description of the following example, an X direction is a height direction (axial direction) of cylindrical battery 18 (hereinafter, simply referred to as battery 18), and a Y direction is an alignment direction of a plurality of batteries 18 arranged in a plurality of rows. A Z direction is a height direction (thickness direction) of battery pack 1, 101, 201, 301, 401 (battery case 10, 110, 210, 410). The X, Y, and Z directions are orthogonal to one another.

### (First exemplary embodiment)

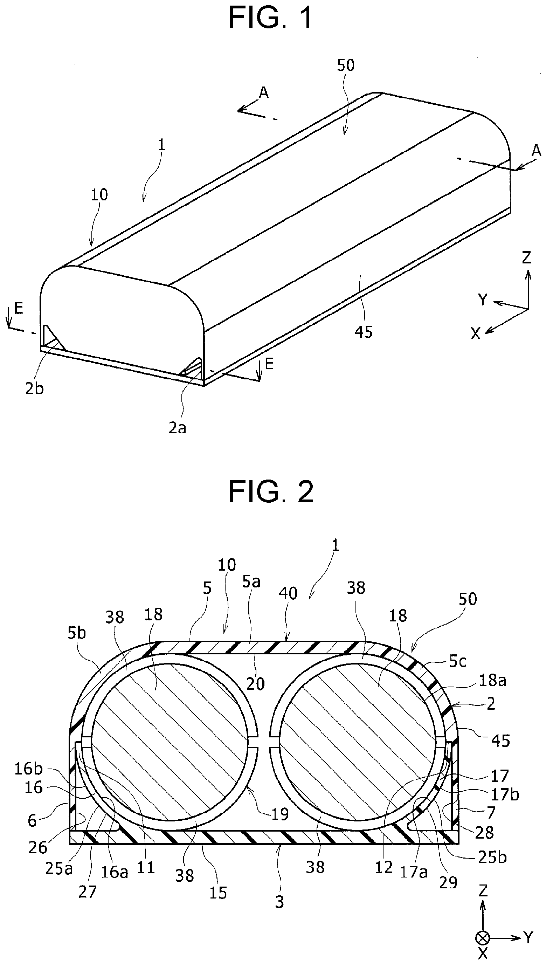

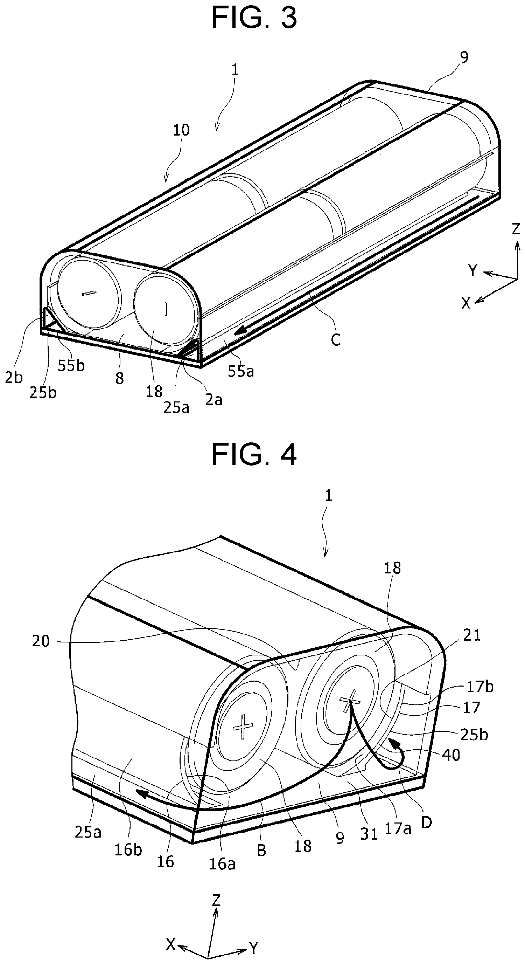

Fig. 1 is a perspective view of battery pack 1 according to the first exemplary embodiment of the present disclosure. Fig. 2 is a cross-sectional view taken along line A-A of Fig. 1, and Fig. 3 is a transparent perspective view illustrating an internal structure of battery pack 1. Fig. 4 is an enlarged transparent perspective view illustrating an internal structure of one side end in the X direction of battery pack 1. In the transparent perspective views of Figs. 3 and 4, the structure in battery pack 1 actually needs to be drawn in a two-dot chain line (imaginary line), but is drawn by a thin solid line for easy understanding. In the first exemplary embodiment, the X direction coincides with the longitudinal direction of battery pack 1 (battery case 10), and the Y direction coincides with the width direction (lateral direction) of battery pack 1 (battery case 10).

As illustrated in Fig. 1, battery pack 1 includes a semi-cylindrical outer shape, and has two outer gas discharge holes 2a and 2b as an example of an outer gas discharger on one side in the X direction. As illustrated in Fig. 2, battery pack 1 includes battery case 10 and the plurality of batteries 18, and battery case 10 includes upper lid member 2 as a first member and base member 3 as a second member. Upper lid member 2 and base member 3 are formed of, for example, a resin material or a metal material. Upper lid member 2 includes thick part 5, first thin part 6, second thin part 7, first closing part 8 (see Fig. 3), and second closing part 9 (see Fig. 3), and at least thick part 5, first thin part 6, and second thin part 7 are integrally molded.

Thick part 5 includes lid flat plate part 5a and two lid curved parts 5b and 5c. Lid flat plate part 5a has a flat plate shape and spreads substantially parallel to an XY plane. First lid curved part 5b is curved so as to be displaced to one side in the Z direction toward the outside in the Y direction from one side end in the Y direction of lid flat plate part 5a. End surface 11 of an end of first lid curved part 5b on the side opposite to lid flat plate part 5a opposes one side in the Z direction. Similarly, second lid curved part 5c is curved so as to be displaced to one side in the Z direction toward the outside in the Y direction from the other side end in the Y direction of lid flat plate part 5a. End surface 12 of an end of second lid curved part 5c opposite to lid flat plate part 5a opposes one side in the Z direction.

In the first exemplary embodiment, a case where upper lid member 2 has two lid curved parts 5b and 5c will be described. However, the upper lid member needs not have the lid curved part, and the upper lid member may have a configuration in which, instead of the two lid curved parts, two side flat plate parts that protrude to one side in the Z direction from both ends in the Y direction of the lid flat plate part spreading substantially parallel to the XY plane and spreads substantially parallel to an XZ plane.

Thin part 6 protrudes to one side in the Z direction from a part of end surface 11 on the outer side in the X direction, meanwhile thin part 7 protrudes to one side in the Z direction from a part of end surface 12 on the outer side in the X direction. As illustrated in Fig. 3, two lid curved parts 5b and 5c and two thin parts 6, 7 extend in the X direction. First closing part 8 is arranged so as to close an opening on one side in the X direction of a gutter shaped groove defined by lid flat plate part 5a, two lid curved parts 5b and 5c, and two thin parts 6, 7 without a gap, and second closing part 9 is arranged so as to close an opening on the other side in the X direction of the gutter shaped groove without a gap.

Referring again to Fig. 2, base member 3 has a dimension in the X direction substantially equal to the dimension in the X direction of upper lid member 2, and has a dimension in the Y direction substantially equal to the dimension in the Y direction of upper lid member 2. Base member 3 includes base flat plate part 15, first base curved part 16, and second base curved part 17. First base curved part 16 is curved on one side in the Y direction of base member 3 so as to be displaced to the other side in the Z direction as it branches from one side in the Y direction of base flat plate part 15 and toward one side in the Y direction. The end surface on the other side in the Z direction of first base curved part 16 opposes a step part of lid curved part 5b formed by the difference in thickness between thick part 5 of lid curved part 5b and first thin part 6. Second base curved part 17 is curved on the other side in the Y direction of base member 3 so as to be displaced to the other side in the Z direction as it branches from the other side in the Y direction of base flat plate part 15 and toward the other side in the Y direction. The end surface on the other side in the Z direction of second base curved part 17 opposes a step part of lid curved part 5c formed by the difference in thickness between thick part 5 of lid curved part 5c and second thin part 7.

The thickness in which the thickness of first base curved part 16 and the thickness of thin part 6 are added together substantially coincides with the thickness of thick part 5. The thickness in which the thickness of second base curved part 17 and the thickness of thin part 7 are added together also substantially coincides with the thickness of thick part 5. Base flat plate part 15 protrudes to one side in the X direction by a length in the X direction that is substantially the same as the thickness dimension in the X direction of first closing part 8 relative to first and second base curved parts 16, 17 on one side in the X direction. Base flat plate part 15 protrudes to the other side in the X direction by a length in the X direction that is substantially the same as the thickness dimension in the X direction of second closing part 9 relative to first and second base curved parts 16, 17.

Upper lid member 2 is brought relatively close to base member 3 in the Z direction, and upper lid member 2 is press-fitted to base member 3 such that first and second base curved parts 16, 17 are slightly distorted inward in the Y direction, whereby upper lid member 2 is fixed to base member 3. In a state where base member 3 and upper lid member 2 are integrated by fitting, an end surface of first base curved part 16 closer to flat plate part 5a in the Z direction (the other side in the Z direction) is in contact with the step part of lid curved part 5b, and a side surface of first base curved part 16 on one side in the Y direction at the end on the other side in the Z direction is bent (distorted) in contact with a side surface of thin part 6 on the other side in the Y direction. Similarly, in a state where base member 3 and upper lid member 2 are integrated by fitting, an end surface of second base curved part 17 closer to lid flat plate part 5a in the Z direction (the other side in the Z direction) is in contact with the step part of lid curved part 5c, and a side surface of second base curved part 17 on the other side in the Y direction at the end on the other side in the Z direction is bent (distorted) in contact with a side surface of the thin part 7 on one side in the Y direction.

Battery case 10 is configured by base member 3 and upper lid member 2 being integrated by fitting in this manner. Since the lower surface of base member 3 is larger in area than the upper surface of upper lid member 2, base member 3 is suitable as an installation surface of equipment on which battery case 10 is installed. Fixing means such as an adhesive or a fastening member may be used for fixing base member 3 and upper lid member 2. Battery case 10 has battery containing chamber 20 that contains the plurality of cylindrical batteries 18 and is configured by a part of an inner surface of upper lid member 2 and a part of an inner surface of base member 3 being combined with each other. As illustrated in Fig. 3, in the first exemplary embodiment, four batteries 18 arranged in two rows and two columns are fixed to battery containing chamber 20. However, in the battery pack of the present disclosure, the batteries arranged in N rows and M columns (here, N and M are both natural numbers, and at least one of N and M is an integer of 2 or more) are only required to be arranged in the battery containing chamber. When a plurality of batteries are arranged as an example, the alignment direction cannot be defined, but in this case, the alignment direction may be defined as a direction orthogonal to both the height direction of the batteries and the height direction of the battery pack.

Batteries 18 are fixed to battery containing chamber 20 by, for example, the following method. Specifically, for example, battery container 40 has battery holder 19, and batteries 18 are fixed to battery holder 19. Here, for example, battery holder 19 may include two or more arc-shaped parts 38 or annular parts that are arranged at intervals in the X direction at both ends in the X direction of each battery 18 and support most or all of the cylindrical outer peripheral surface of batteries 18 in the circumferential direction, and a flat plate part that spreads radially inward from one side end in the X direction of the arc-shaped parts 38 or the annular parts. Batteries 18 may be held by pushing the batteries into two or more arc-shaped parts 38 or two annular parts until one side end surfaces of batteries 18 come into contact with the flat plate part. As illustrated in Fig. 2, when battery holder 19 has two arc-shaped parts 38 at each end in the X direction, with respect to each end in the X direction, arc-shaped part 38 located on one side in the Z direction may be molded integrally with base member 3, and arc-shaped part 38 located on the other side in the Z direction may be molded integrally with upper lid member 2. Alternatively, as adopted in a personal computer or the like, the plurality of batteries may be fixed to predetermined positions on the inner surface of the battery containing chamber with a double-sided tape or an adhesive.

Although not illustrated, the plurality of batteries 18 are electrically connected by at least one of series connection and parallel connection using a bus bar or the like in a state of being arranged at predetermined positions in battery containing chamber 20. Here, when series connection exists, the output of battery pack 1 can be increased, and when parallel connection exists, the capacity of battery pack 1 can be increased.

As illustrated in Fig. 4, battery containing chamber 20 has an inner gas discharge hole 21 as an inner gas discharger only on the other side in the X direction. Inner gas discharge hole 21 is an opening part of an end surface of battery container 40, and is provided to discharge a gas generated in batteries 18 to the outside of battery containing chamber 20 when battery 18 fixed to battery containing chamber 20 abnormally generates heat. A part of upper lid member 2 and a part of base member 3 constitute battery container 40 having inner gas discharge hole 21 and battery containing chamber 20 in combination with each other.

As illustrated in Figs. 2 and 4, battery case 10 has first corner passage part 25a extending in the X direction at an end (corner) on one side in the Y direction at an end closer to base flat plate part 15 in the Z direction (one side in the Z direction), and has second corner passage part 25b extending in the X direction at an end on the other side in the Y direction at an end (corner) on one side in the Z direction. As illustrated in Fig. 2, each of first and second corner passage parts 25a and 25b is configured such that a part of upper lid member 2 and a part of base member 3 are combined with each other.

Specifically, first corner passage part 25a is defined by thin part 6 of upper lid member 2, first base curved part 16 of base member 3, and base flat plate part 15 of base member 3. The inner surface of first corner passage part 25a includes inner surface part 26 formed of a part of upper lid member 2 and inner surface part 27 formed of a part of base member 3. Similarly, second corner passage part 25b is defined by thin part 7 of upper lid member 2, second base curved part 17 of base member 3, and base flat plate part 15 of base member 3. The inner surface of second corner passage part 25b includes inner surface part 28 formed of a part of upper lid member 2 and inner surface part 29 formed of a part of base member 3. Inner surface part 26 and inner surface part 28 constitute a first inner surface, and inner surface part 27 and inner surface part 29 constitute a second inner surface.

As illustrated in Fig. 4, the opening of inner gas discharge hole 21 of battery containing chamber 20 opposes second closing part 9 at an interval on one side in the X direction, and space 31 exists between the opening of inner gas discharge hole 21 and the inner surface of second closing part 9 on one side in the X direction. As illustrated in Figs. 2 and 4, inner curved surfaces 16a and 17a of first and second base curved parts 16, 17 curved along the outer peripheral surface of batteries 18 define a part of battery containing chamber 20, and outer curved surfaces 16b and 17b of first and second base curved parts 16, 17 define a part of first and second corner passage parts 25a and 25b. By adopting such configuration, it becomes easy to position batteries 18 in battery containing chamber 20, it is possible to effectively use a dead space in battery case 10, it is possible to enlarge cross sections perpendicular to the extending directions of first and second corner passage parts 25a and 25b, and it is possible to cause the gas to smoothly flow. Furthermore, it is possible to not only increase the volumes of first and second corner passage parts 25a and 25b but also make battery case 10 compact.

As illustrated in Fig. 3, each of first and second corner passage parts 25a and 25b extends from one side end in the X direction to the other side end in the X direction. First corner passage part 25a is continuous to outer gas discharge hole 2a at the end on the other side in the X direction, and communicates with the outer region of battery pack 1. Second corner passage part 25b is continuous to outer gas discharge hole 2b at the end on the other side in the X direction, and communicates with the outer region of battery pack 1. Each of first and second corner passage parts 25a and 25b is a height-direction passage part. Space 31 (see Fig. 4), first corner passage part 25a, and outer gas discharge hole 2a constitute gas exhaust passage 55a, and space 31, second corner passage part 25b, and outer gas discharge hole 2b constitute gas exhaust passage 55b. Space 31 constitutes a part of gas exhaust passage 55a and also constitutes a part of gas exhaust passage 55b. As illustrated in Figs. 1 and 2, gas exhaust passages 55a and 55b are located inside outer wall part 50 having outer surface 45 in contact with the outer region and outside battery container 40.

Referring to Fig. 4, it is assumed that at least one battery 18 abnormally generates heat and ejects high-temperature gas or the like to the outside. Then, the high-temperature gas passes through inner gas discharge hole 21, which is the only place communicating with the outside in battery containing chamber 20, and reaches space 31. Thereafter, for example, after flowing in space 31 to one side in the Y direction in the direction indicated by arrow B, the gas flows in first corner passage part 25a, and further flows in first corner passage part 25a to one side in the X direction indicated by arrow C (see Fig. 3), and then passes through outer gas discharge hole 2a and is discharged to the outside. Alternatively, the high-temperature gas that has arrived in space 31 flows in space 31 toward the other side in the Y direction in the direction indicated by arrow D, then flows in second corner passage part 25b, further flows in second corner passage part 25b to one side in the X direction, and then passes through outer gas discharge hole 2b and is discharged to the outside. The high-temperature gas flows in battery case 10 for a long distance from one side end to the other side end in the X direction (height direction of batteries 18) before ejecting from battery 18 and is discharged from outer gas discharge holes 2a and 2b. Therefore, the gas is effectively cooled by the flow from the one side end to the other side end, and the cooled gas is discharged to the outside.

As described above, battery case 10 includes battery container 40 having battery containing chamber 20 containing the plurality of batteries 18 and inner gas discharge hole (inner gas discharger) 21 for discharging gas generated in batteries 18 on at least one side in the height direction (X direction) of the batteries fixed to battery containing chamber 20. Battery case 10 includes one or more gas exhaust passages 55a and 55b having first and second corner passage parts (height-direction passage parts) 25a and 25b that are located inside outer wall part 50 having outer surface 45 in contact with an outer region and outside battery container 40 and extend in the X direction, and outer gas discharge holes (outer gas dischargers) 2a and 2b for discharging the gas to an outside, and for guiding a gas from inner gas discharge hole 21 to outer gas discharge holes 2a and 2b.

Therefore, since one or more gas exhaust passages 55a and 55b for exhausting the gas ejected from battery 18 that has abnormally generated heat can be formed only by providing battery container 40 in battery case 10, the structure of battery case 10 can be simplified and the manufacturing cost of battery case 10 can be easily reduced as compared with the configuration of the prior art in which the duct is laid outside the battery container.

Furthermore, gas exhaust passages 55a and 55b have first and second corner passage parts 25a and 25b extending in the height direction (X direction) of battery 18. Here, the dimension of battery case 10 in the height direction (X direction) of battery 18 tends to be long, and in particular, when batteries 18 are connected in series in battery case 10, the dimension of battery case 10 in the X direction can be twice or more the height of batteries 18. Therefore, since the lengths of first and second corner passage parts 25a and 25b can be increased, the gas can be effectively cooled while passing through first and second corner passage parts 25a and 25b. Therefore, not only the structure of battery case 10 can be simplified and the manufacturing cost of battery case 10 can be easily reduced, but also the gas can be efficiently cooled, and the cooling performance of battery case 10 can be improved.

The inner surfaces of first and second corner passage parts 25a and 25b may include outer curved surfaces 16b and 17b extending along cylindrical outer peripheral surface 18a of battery 18.

According to the present configuration, as illustrated in Figs. 2 and 4, inner curved surfaces 16a and 17a of first and second base curved parts 16, 17 curved along the outer peripheral surface of battery 18 can define a part of battery containing chamber 20, and outer curved surfaces 16b and 17b of first and second base curved parts 16, 17 can define a part of first and second corner passage parts 25a and 25b. Therefore, it becomes easy to position batteries 18 in battery containing chamber 20, it is possible to effectively use a dead space in battery case 10, it is possible to enlarge cross sections (flow path area) perpendicular to the extending directions of first and second corner passage parts 25a and 25b, and it is possible to cause the gas to smoothly flow. Furthermore, it is possible to not only increase the volumes of first and second corner passage parts 25a and 25b but also make battery case 10 compact.

Battery container 40 may be fixed in a state where the plurality of batteries 18 are arranged in a plurality of columns so as to be aligned in the Y direction (alignment direction) orthogonal to the X direction. Battery case 10 may include first corner passage part 25a located inside the first corner located on the first side in the Y direction and second corner passage part 25b located on the second side in the Y direction and located inside the second corner opposing the first corner in the Y direction. Each of first corner passage part 25a and second corner passage part 25b may be a height-direction passage part extending in the X direction.

According to the present configuration, it is possible to effectively use a dead space that is easily generated at a corner of the case, it is possible to easily form a long gas exhaust passage without increasing the size of battery case 10, and it is possible to efficiently cool gas.

Outer gas discharge holes 2a and 2b may exist only on one side in the X direction, meanwhile inner gas discharge hole 21 may exist only on the other side in the X direction. First and second corner passage parts 25a and 25b may guide the gas from the other side to one side in the X direction in battery case 10.

According to the present configuration, gas exhaust passages 55a and 55b can guide gas at least from one side to the other side in the X direction in battery case 10, and a path length of gas exhaust passages 55a and 55b for cooling the gas can be significantly increased. Therefore, the gas can be more efficiently cooled.

Battery case 10 may include upper lid member (first member) 2 and base member (second member) 3 fixed to upper lid member 2. The inner surfaces of first and second corner passage parts (height-direction passage parts) 25a and 25b may include the first inner surface (inner surface part 26 and inner surface part 28) including a part of upper lid member 2 and the second inner surface (inner surface part 27 and inner surface part 29) including a part of base member 3.

According to the present configuration, by fixing upper lid member 2 to base member 3, it is possible to easily form gas exhaust passages 55a and 55b between upper lid member 2 and base member 3. In some cases, by retrofitting a new member to an existing case, it is possible to form a gas exhaust passage between the existing case and the new member.

By adopting the fitting structure described with reference to Fig. 2 and moreover making the area of the back surface of base flat plate part 15 of base member 3 larger than the area of the upper surface of lid flat plate part 5a of upper lid member 2, it is possible to easily increase the area of the fix surface (of the back surface) in battery pack 1, and it is possible to reliably and stably fix battery pack 1 to the installation destination.

In the above exemplary embodiment, one or more outer discharge holes (through-holes) 2a and 2b as the outer gas discharger are not covered with a mesh member, for example, a metal mesh, a porous metal, or the like. However, in the battery case of the present disclosure, the outer gas discharger may be one or more through-holes, and the battery case may include a mesh member arranged so as to cover the through-holes. Adoption of the present configuration enables the gas to be cooled even with a mesh member, and safety to be improved. The member covering the through-hole needs not have a mesh shape, and may be made of an air-permeable and waterproof material, for example, Gore-Tex (registered trademark) that allows exhaust gas to pass and shields liquid such as water from the outside. The air-permeable and waterproof material is burned off by the gas generated from the battery, and the gas is discharged from the outer gas discharger to the outside of the battery pack.

Note that the present disclosure is not limited to the above-described exemplary embodiment and modified examples thereof, and various improvements and changes are possible within the matters described in the claims of the present application and the equivalent scope thereof. Next, some of those exemplary embodiments and modified examples will be described. In

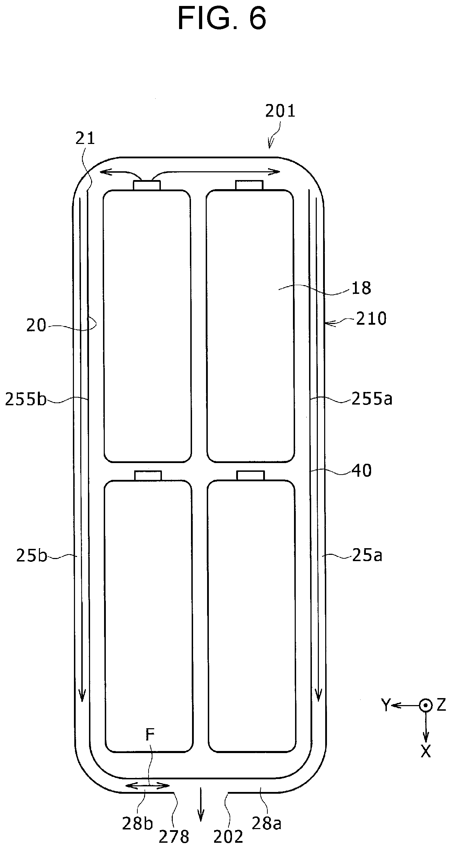

Figs. 6 to 8 below, arrows indicate the flow direction of the gas ejected from battery 18 that has abnormally generated heat.

### (Second exemplary embodiment)

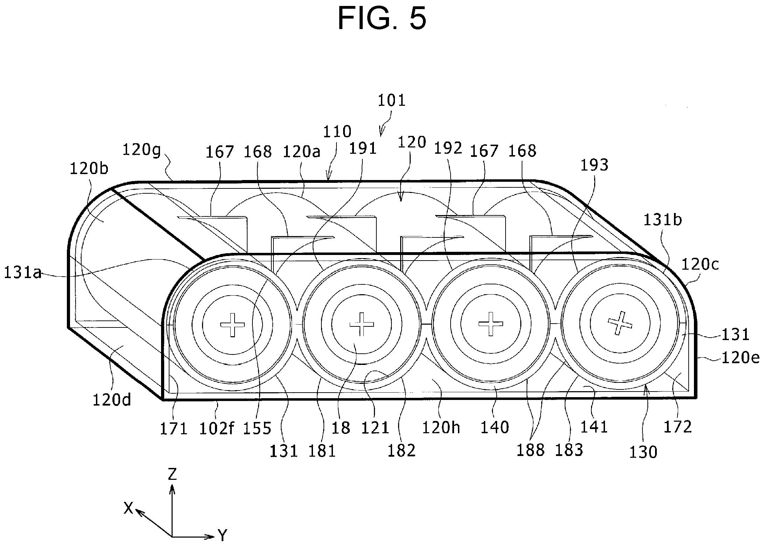

Fig. 5 is a perspective view of battery pack 101 according to the second exemplary embodiment of the present disclosure. In the transparent perspective view of Fig. 5, the structure in battery pack 101 actually needs to be drawn in a two-dot chain line (imaginary line), but is drawn by a thin solid line for easy understanding. In the second exemplary embodiment, the X direction coincides with the width direction (lateral direction) of battery pack 1 (battery case 10), and the Y direction coincides with the longitudinal direction (lateral direction) of battery pack 1 (battery case 10). In the following exemplary embodiments including the second exemplary embodiment, the same reference numerals as those of the first exemplary embodiment are given to the same configurations as those of the first exemplary embodiment, and the description thereof will be omitted. In the following exemplary embodiments including the second exemplary embodiment, the description of the same action effects and modified examples as those of the first exemplary embodiment will be omitted.

As illustrated in Fig. 5, battery pack 101 includes battery case 110 and the plurality of batteries 18, and battery case 110 includes outer case 120 and inner case 130. Outer case 120 includes top plate part 120a that spreads substantially parallel to the XY plane and has a substantially rectangular upper surface, first curved plate part 120b that is located on one side in the Y direction of top plate part 120a and is curved so as to be displaced on one side in the Z direction toward one side in the Y direction, second curved plate part 120c that is located on the other side in the Y direction of top plate part 120a and is curved so as to be displaced on one side in the Z direction toward the other side in the Y direction, first side plate part 120d that spreads substantially parallel to the XZ plane from an end on one side in the Z direction of first curved plate part 120b, and second side plate part 120e that spreads substantially parallel to the XZ plane from an end on one side in the Z direction of second curved plate part 120c.

Outer case 120 includes bottom plate part 120f that is connected to the end on one side in the Z direction of first side plate part 120d and the end on one side in the Z direction of second side plate part 120e, spreads substantially parallel to top plate part 120a, and has a substantially rectangular bottom surface. Outer case 120 includes first lid part 120g that is connected to the end on one side in the X direction of plate parts 120a to 120f and closes the opening on one side in the X direction of outer case 120, and second lid part 120h that is connected to the end on the other side in the X direction of plate parts 120a to 120f and closes the opening on the other side in the X direction of outer case 120.

Inner case 130 is arranged in outer case 120. In the second exemplary embodiment, the plurality of batteries 18 are arranged in one row and a plurality of columns, but inner case 130 has a structure in which two cylinders 131 adjacent in the Y direction in a plurality of cylinders (bottomed cylinders) 131 arranged in the plurality columns in the Y direction (alignment direction) are connected by a set of all two cylinders 131. One battery 18 is contained in each cylinder 131. Inner case 130 is fixed, for example, in outer case 120 by press fitting, shrink fitting, cold fitting, or the like. Outer case 120 has a stopper (not illustrated) protruding inward from the inner surface of outer case 120 and spreading in the YZ direction on one side in the X direction, for example. Then, by pushing inner case 130 to one side in the X direction until inner case 130 comes into contact with the stopper, inner case 130 is fixed to outer case 120.

As illustrated in Fig. 5, in an integrated state where inner case 130 is fixed at a predetermined position in outer case 120 and inner case 130 is integrated with outer case 120, an end on one side in the Z direction of each cylinder 131 is in contact with bottom plate part 120f, and an end on the other side in the Z direction of each cylinder 131 is in contact with top plate part 120a. Each of first and second curved plate parts 120b and 120c has a curved shape corresponding to a part in the circumferential direction of the cylindrical outer peripheral surface of cylinder 131 (part corresponding to n/2 of the substantially circumferential direction). In the integrated state, the inner surface of first curved plate part 120b comes into contact with a part in the circumferential direction of cylindrical outer peripheral surface 131a of cylinder 131 located at the end on one side in the Y direction, and the inner surface of second curved plate part 120c comes into contact with a part in the circumferential direction of cylindrical outer peripheral surface 131b of cylinder 131 located at the end on the other side in the Y direction. Due to this, inner case 130 is precisely positioned at a predetermined position of outer case 120 in the integrated state.

Each cylinder 131 has a substantially bottomed cylindrical shape, and has an opening capable of effectively discharging gas only on the other side in the X direction. The opening on the other side in the X direction of each cylinder 131 constitutes inner gas discharge hole 121 included in the inner gas discharger. The opening of inner gas discharge hole 121 is located at an interval in the X direction with respect to the inner surface on one side in the axial direction of second lid part 120h, and space 141 exists between the opening of inner gas discharge hole 121 and the inner surface on one side in the axial direction of second lid part 120h.

As illustrated in Fig. 5, in the integrated state, battery case 110 has first corner passage part 171 and second corner passage part 172 that are located at both side ends of the Y direction on one side in the Z direction between outer case 120 and inner case 130 and extend in the X direction. Battery case 110 has, regarding a region on one side in the Z direction, central passage parts 181, 182, 183 extending in the X direction in a Y direction range between a Y direction position where one cylinder 131 of two cylinders 131 adjacent in the Y direction is in contact with bottom plate part 120f and a Y direction position where other cylinder 131 of two cylinders 131 is in contact with bottom plate part 120f.

Battery case 110 has, regarding a region on the other side in the Z direction, central passage parts 191, 192, 193 extending in the X direction in a Y direction range between a Y direction position where one cylinder 131 of two cylinders 131 adjacent in the Y direction is in contact with top plate part 120a and a Y direction position where other cylinder 131 of two cylinders 131 is in contact with top plate part 120a.

Although not illustrated, one outer gas discharge hole extending in the X direction is provided at each part of first lid part 120g facing each of passage parts 171, 172, 181 to 183, 191 to 193. The plurality of outer gas discharge holes constitute the outer gas discharger. This allows the gas flowing through each of passage parts 171, 172, 181 to 183, 191 to 193 to one side in the X direction to be exhausted to the outside of battery case 110 through the outer gas discharge hole.

As described above, in battery case 110, battery container 140 may be fixed in a state where batteries 18 are arranged in a plurality of columns so as to be aligned in the Y direction orthogonal to the X direction. Regarding the Y direction, battery case 110 may include central passage parts 181 to 183, 191 to 193 located between an end on the first side in batteries 18 belonging to a first column located on the first side of the Y direction among two columns adjacent to each other in the Y direction and an end on the second side in batteries 18 belonging to a second column located on the second side in the Y direction among the two columns. Central passage parts 181 to 183, 191 to 193 may be height-direction passage parts extending in the X direction.

According to the present configuration, regarding to each of central passage parts 181 to 183, 191 to 193 included in battery case 110, it is possible not only to form a partial region (substantially half region) of central passage parts 181 to 183, 191 to 193 between one battery 18 in two batteries 18 adjacent to each other in the Y direction and the end surface in the Z direction of battery case 110, but also to form another partial region (remaining substantially half region) of central passage parts 181 to 183, 191 to 193 between other battery 18 and the end surface in the Z direction of battery case 110. Therefore, the flow path area (cross-sectional area when the passage parts are cut along the YX plane) of central passage parts 181 to 183, 191 to 193 becomes larger than the flow path area of corner passage parts 171, 172, and the amount of gas flowing through central passage parts 181 to 183, 191 to 193 can be made larger than the amount of gas flowing through corner passage parts 171, 172. Therefore, since the cooling effect of gas in central passage parts 181 to 183, 191 to 193 becomes larger than the cooling effect of gas in corner passage parts 171, 172, the cooling effect of battery case 110 can be remarkably increased.

Battery case 110 may include inner case 130 having battery container 140 and outer case 120 containing inner case 130. Then, the gas exhaust passage may be defined by the outer surface of inner case 130 and the inner surface of outer case 120.

According to the present configuration, the gas exhaust passage can be easily formed only by fixing inner case 130 in outer case 120 by press fitting, shrink fitting, cold fitting, or the like.

As illustrated in Fig. 5, when each of central passage parts 181 to 183, 191 to 193 has two arc-shaped parts 188 defining a part thereof and there is a plane (not illustrated) in which two arc-shaped parts 188 are substantially plane-symmetrical, the capacity of battery containing chamber 155 can be made small, positioning of battery 18 in battery containing chamber 155 can be easily executed, the flow path area of central passage parts 181 to 183, 191 to 193 can also be increased, and further, battery case 110 can be configured to be more compact.

As illustrated in Fig. 5, first protruding plate part 167 that protrudes from one side in the Y direction to the other side in the Y direction and closes a part of the flow path area and second protruding plate part 168 that protrudes from the other side in the Y direction to the one side in the Y direction and closes a part of the flow path area may be alternately arranged at intervals in the X direction in the passage of at least one central passage parts 191 to 193. Adoption of this configuration makes it possible to increase the path length through which the gas flows in central passage parts 191 to 193, and to improve the cooling performance of the gas in central passage parts 191 to 193.

### (Third exemplary embodiment)

In the first exemplary embodiment, the case where each corner passage parts (height-direction passage parts) 2a and 2b is continuous to one of outer gas discharge holes 2a and 2b, and each of gas exhaust passages 55a and 55b has one of outer gas discharge holes 2a and 2b has been described. However, even when the battery case has a plurality of height-direction passage parts, the battery case may have only one outer discharge hole. At least one gas exhaust passage may have a passage part other than the height-direction passage part extending in the height direction, and for example, may include an alignment direction passage extending in the alignment direction in addition to the height-direction passage part.

For example, as illustrated in Fig. 6, that is, a schematic cross-sectional view corresponding to the schematic cross-sectional view taken along line E-E of Fig. 1 in battery pack 201 of the third exemplary embodiment, battery case 210 may have first and second corner passage parts 25a and 25b, and only one outer discharge hole 202 may be provided at the center in the Y direction of end surface 278 on one side in the Z direction of battery case 210. This makes it possible to increase the path length of each of gas exhaust passages 255a and 255b by the path length of alignment direction passages 28a and 28b, that is, the length about half the Y direction dimension of battery case 210 indicated by arrow F in an end region on one side in the Z direction where the gas is discharged to the outside, and makes it possible to improve the cooling effect of each of gas exhaust passages 255a and 255b.

### (Fourth exemplary embodiment)

In the second exemplary embodiment, the case where first and second protruding plate parts 167, 168 are provided in the height-direction passage part (central passage parts 191 to 193) to increase the path length of the height-direction passage part (central passage parts 191 to 193) has been described. Here, such first and second protruding plate parts may play a role of straightening the gas.

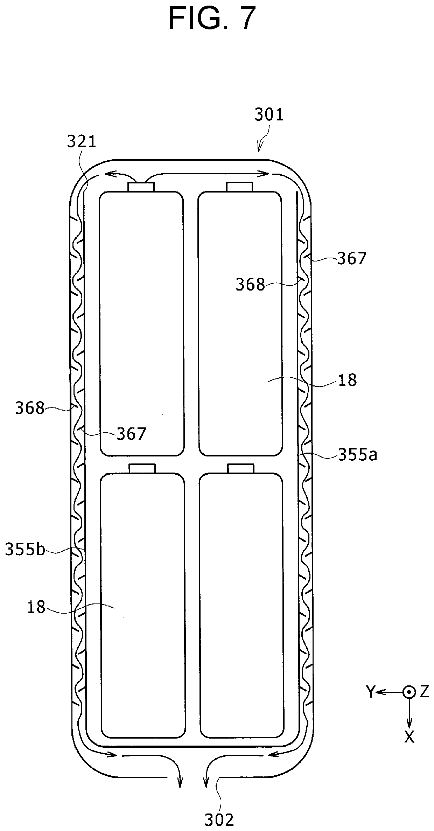

Specifically, with reference to Fig. 7, that is, a schematic cross-sectional view corresponding to Fig. 6 in battery pack 301 according to the fourth exemplary embodiment, it is assumed that the gas flow direction is defined as a direction in which the gas flows from inner gas discharge hole 321 side to outer gas discharge hole 302 in height-direction passage parts 355a and 355b. At this time, in at least one of height-direction passage parts 355a and 355b, first protruding plate part 367 protruding from one side in the Y direction to the other side in the Y direction and second protruding plate part 368 protruding from the other side in the Y direction to the other side in the Y direction may be alternately configured at intervals in the X direction to each other. Each of protruding plate parts 367, 368 may protrude in a direction inclined in the X direction so as to be positioned on a downstream in the gas flow direction toward the tip end. Adoption of such configuration makes it possible not only to increase the path lengths of height-direction passage parts 355a, 355b but also to smoothly flow gas to the downstream side while straightening by the respective protruding plate parts 367, 368 without respective protruding plate parts 367, 368 hindering the flow of the gas to the downstream.

### (Fifth exemplary embodiment)

In the first exemplary embodiment, the case where corner passage parts (height-direction passage parts) 25a, 25b extend from one end to the other end in the X direction of battery case 10 has been described. However, the height-direction passage part needs not extend from one end to the other end in the X direction of the battery case.

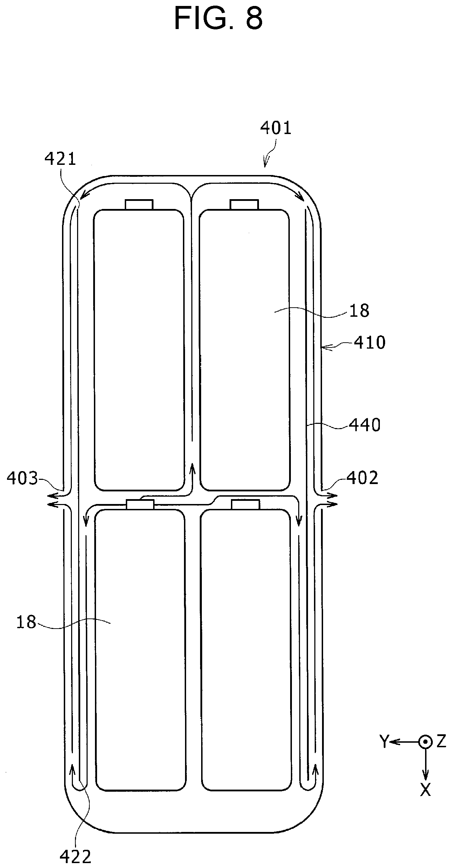

Specifically, as illustrated in Fig. 8, that is, a schematic cross-sectional view corresponding to Fig. 6 in battery pack 401 according to the fifth exemplary embodiment, inner gas discharge holes 421, 422 as an example of the inner gas discharger may be located on both sides in the height direction (X direction) of battery 18 in battery container 440. One or more outer gas discharge holes 402, 403 as an example of the outer gas discharger may be located in a central part other than both ends in the X direction of battery case 410.

Depending on the specifications of the battery pack, there is a case where a large number of batteries 18 are connected in series and the dimension in the height direction of batteries 18 in the battery pack is long. In such a case, even adoption of the configuration of the fifth exemplary embodiment makes it possible to form a gas guide passage having a sufficient path length for cooling the gas.

### (Other modified examples)

In the first exemplary embodiment, the case where upper lid member 2 is fixed (more specifically, fitted and fixed) to base member 3, and the inner surfaces of corner passage parts (height-direction passage parts) 25a and 25b include the first inner surface (inner surface part 26 and inner surface part 28) constituted by a part of upper lid member 2 and the second inner surface (inner surface part 27 and inner surface part 29) constituted by a part of base member 3 has been described.

However, the height-direction passage part may be formed of only an inner surface of one member. For example, the height-direction passage part in the battery case may be formed by extrusion molding using a resin material or a metal material, and in this case, the height-direction passage part can be formed only of an inner surface of one member.

In the battery case of the present disclosure, when the inner gas discharge hole is provided at the end in the X direction, the inner gas discharge hole may be provided on the outer peripheral surface of the battery container. When the outer gas discharge hole is provided at the end in the X direction, the outer gas discharge hole may be provided on the outer peripheral surface of the battery case.

In the battery case of the present disclosure, the inner gas discharger needs not be the inner gas discharge hole, and the outer gas discharger needs not be the outer gas discharge hole. Specifically, conventionally, for safety, the secondary battery has a structure in which the secondary battery is broken when the internal pressure becomes equal to or higher than a predetermined pressure, and the generated gas or the like is discharged to the outside. However, similarly to this, at least one of the inner gas discharger and the outer gas discharger may have a structure in which it is broken when the internal pressure becomes equal to or higher than a predetermined pressure, and such structure may be a part having low strength (rigidity) as compared with other parts, for example.

In the battery case of the present disclosure, the height-direction passage part needs not have an inner surface formed of a curved surface. The battery case of the present disclosure may have only one corner passage part, or needs not have the corner passage part. The outer shape of the battery case of the present disclosure needs not be the semi-cylindrical shape illustrated in Fig. 1, and may be any shape such as a rectangular-parallelepiped shape or a cylindrical shape.

### REFERENCE MARKS IN THE DRAWINGS

1, 101, 201, 301, 401: battery pack
2: upper lid member
2a, 2b, 202, 302, 402: outer gas discharge hole
3: base member
10, 110, 210, 410: battery case
16: first base curved part
16a: inner curved surface
16b: outer curved surface
17: second base curved part
18: battery
20: battery containing chamber
21, 121, 321, 421: inner gas discharge hole
25a, 171: first corner passage part
25b, 172: second corner passage part
40, 140: battery container
45: outer surface
50: outer wall part
55a, 55b, 255a, 255b: gas exhaust passage
120: outer case
130: inner case
155: battery containing chamber
181 to 183, 191 to 193: central passage part
355a, 355b: height-direction passage part

## Claims

1. A battery case comprising:
a battery container including
a battery containing chamber containing a plurality of cylindrical batteries, and
an inner gas discharger for discharging a gas generated in the plurality of cylindrical batteries on at least one side in a height direction of the plurality of cylindrical batteries fixed to the battery containing chamber; and
one or more gas exhaust passages each including
a height-direction passage part that is located inside an outer wall part including an outer surface in contact with an outer region and outside the battery container and is elongated in the height direction, and
an outer gas discharger for discharging the gas to an outside, the one or more gas exhaust passages each guiding a gas from the inner gas discharger to the outer gas discharger.

2. The battery case according to Claim 1, comprising:
an inner case that includes the battery container; and
an outer case that contains the inner case,
wherein the one or more gas exhaust passages are defined by an outer surface of the inner case and an inner surface of the outer case.

3. The battery case according to Claim 1 or 2, wherein an inner surface of the height-direction passage part includes a curved surface elongated along a cylindrical outer peripheral surface of each of the plurality of cylindrical batteries.

4. The battery case according to any one of Claims 1 to 3, wherein
the battery container is fixed in a state where the plurality of cylindrical batteries are arranged in a plurality of columns to be aligned in an alignment direction orthogonal to the height direction, and includes a first corner passage part inside a first corner located on a first side of the battery container in the alignment direction, and a second corner passage part located on a second side of the battery container in the alignment direction and inside a second corner opposing the first corner in the alignment direction, and
each of the first corner passage part and the second corner passage part is the height-direction passage part.

5. The battery case according to any one of Claims 1 to 4, wherein
the battery container is fixed in a state where the plurality of cylindrical batteries are arranged in a plurality of columns to be aligned in an alignment direction orthogonal to the height direction, and includes a central passage part located, regarding the alignment direction, between an end on a first side of each of the plurality of cylindrical batteries belonging to a first column located on the first side in the alignment direction of two rows adjacent to each other in the alignment direction and an end on a second side of each of the plurality of cylindrical batteries belonging to a second column located on the second side in the alignment direction of the two rows, and
the central passage part is the height-direction passage part.

6. The battery case according to any one of Claims 1 to 5, wherein
the outer gas discharger is disposed only on one side in the height direction, and the inner gas discharger is disposed only on another side in the height direction, and
the height-direction passage part guides the gas from an end on the other side to an end on one side of the height direction.

7. The battery case according to any one of Claims 1 to 5, wherein
the inner gas discharger is located on both sides in the height direction of the battery container, and
the outer gas discharger is located at a central part other than both ends in the height direction.

8. The battery case according to any one of Claims 1 to 7, comprising:
a first member; and
a second member fixed to the first member,
wherein an inner surface of the height-direction passage part includes a first inner surface constituted by a part of the first member and a second inner surface constituted by a part of the second member.

9. The battery case according to any one of Claims 1 to 8, wherein
the outer gas discharger is one or more through-holes, and
the battery case includes a mesh member arranged to cover the one or more through-holes, or an air-permeable and waterproof member includes an air-permeable and waterproof material that is configured to cause the gas to pass through and prevent external water from entering the outer case, the air-permeable and waterproof member covering the one or more through-holes.

10. A battery pack comprising:
the battery case according to any one of Claims 1 to 9; and
the plurality of batteries arranged in the battery containing chamber of the battery case.
